Europäisches Patentamt

European Patent Office

Office européen des brevets

(11) Numéro de publication : **0 065 918
B1**

## (12) FASCICULE DE BREVET EUROPÉEN

(45) Date de publication du fascicule du brevet :
16.04.86

(21) Numéro de dépôt : 82400911.2

(22) Date de dépôt : 17.05.82

(51) Int. Cl.⁴ : **G 05 B 19/23**

(54) Dispositif de commande à contrôle de position pour machine-outil.

(30) Priorité : 18.05.81 FR 8109824

(43) Date de publication de la demande :
01.12.82 Bulletin 82/48

(45) Mention de la délivrance du brevet :
16.04.86 Bulletin 86/16

(84) Etats contractants désignés :
AT BE CH DE GB IT LI LU NL SE

(56) Documents cités :
DE-A- 966 754
FR-A- 2 188 352
FR-A- 2 242 198
US-A- 3 098 995
US-A- 3 497 668
Le dossier contient des informations techniques présentées postérieurement au dépôt de la demande et ne figurant pas dans le présent fascicule.

(73) Titulaire : **CENTRE D'ETUDES DU FRAISAGE (C.E.F.)**
**80 rue des Meuniers**
**F-92220 Bagneux (FR)**

(72) Inventeur : **Sachot, Michel**
**55, rue Curie**
**F-91400 Saclay (FR)**

(74) Mandataire : **Laget, Jean-Loup et al**
**Cabinet Pierre Loyer 18, Rue de Mogador**
**F-75009 Paris (FR)**

## Description

L'invention concerne un dispositif de commande à contrôle de position pour machine-outil.

Dans les machines-outils de type classique, les mouvements d'un axe de la machine sont commandés par un moteur placé sous le contrôle d'un variateur de vitesse. Usuellement, ce variateur reçoit une consigne par l'intermédiaire d'une commande manuelle à boutons manœuvrés par l'utilisateur de la machine, ou par l'intermédiaire d'une commande numérique automatique.

Des machines de ce type assurant un asservissement avec contrôle de vitesse et de position sont divulguées par le FR. A-2 188 352 pour la commande analogique, et par le US. A-3 098 995 pour la commande numérique.

Lors d'une opération d'usinage, l'utilisateur ne se rend pas toujours compte de la difficulté de l'opération et la consigne de vitesse affichée peut dépasser les possibilités de la machine, au risque d'entraîner une rupture d'outil ou une destruction de la machine. De plus, il est délicat d'assurer un contrôle de position précis lors d'un déplacement d'un axe de la machine.

Un but recherché est de permettre à l'utilisateur de se rendre compte directement de la difficulté de l'opération d'usinage, et d'agir en conséquence sur la vitesse d'avancement de l'outil, tout en gardant le contrôle de la position de l'outil par rapport à la position de consigne désirée.

Le US-A-3 497 668 propose un dispositif fournissant à l'opérateur une sensation tactile des efforts s'exerçant entre une machine-outil et la pièce usinée par ladite machine. Cette information concerne l'équilibre des efforts se produisant entre machine et pièce usinée, et ses variations, en fonction de divers paramètres.

Le DE-A-966 754 suggère l'utilisation d'un coupleur magnétique à poudre pour éviter les surcharges dangereuses pour une machine-outil.

Un but de l'invention est de proposer l'utilisation d'un coupleur magnétique à poudre pour donner à l'opérateur d'une machine-outil une sensation tactile des efforts entre machine et pièce usinée.

Un autre but de l'invention est d'alimenter ce coupleur magnétique à poudre par deux signaux électriques différents pour fournir à l'opérateur ladite sensation tactile.

L'invention a pour objet un dispositif de commande à contrôle de position pour machine-outil du type comprenant :

une manivelle manœuvrable par un utilisateur et reliée à un organe tournant destiné à délivrer un signal de consigne numérique ;

un dispositif de contrôle de position de l'outil destiné à délivrer un signal numérique de contrôle de position de l'outil ;

des moyens pour comparer entre eux lesdits signaux numériques de consigne et de contrôle ;

un convertisseur numérique-analogique pour convertir en un signal analogique le résultat numérique de la comparaison et pour commander avec ledit signal analogique la vitesse d'un moteur à travers un variateur ;

ledit dispositif étant caractérisé par le fait que afin de fournir audit utilisateur une sensation tactile des efforts s'exerçant entre la machine-outil et une pièce usinée par ladite machine, ladite manivelle manœuvrable par ledit utilisateur est reliée audit organe tournant par l'intermédiaire d'un coupleur magnétique à poudre et que ledit coupleur magnétique à poudre est alimenté par un signal électrique qui est une fonction représentative desdits efforts s'exerçant entre la machine-outil et ladite pièce usinée par ladite machine.

Selon d'autres caractéristiques de l'invention, le signal électrique d'alimentation dudit coupleur magnétique à poudre est :

soit le signal délivré par ledit convertisseur numérique-analogique,

soit un signal image de l'intensité du courant dans l'induit dudit moteur,

soit la somme de ces deux signaux.

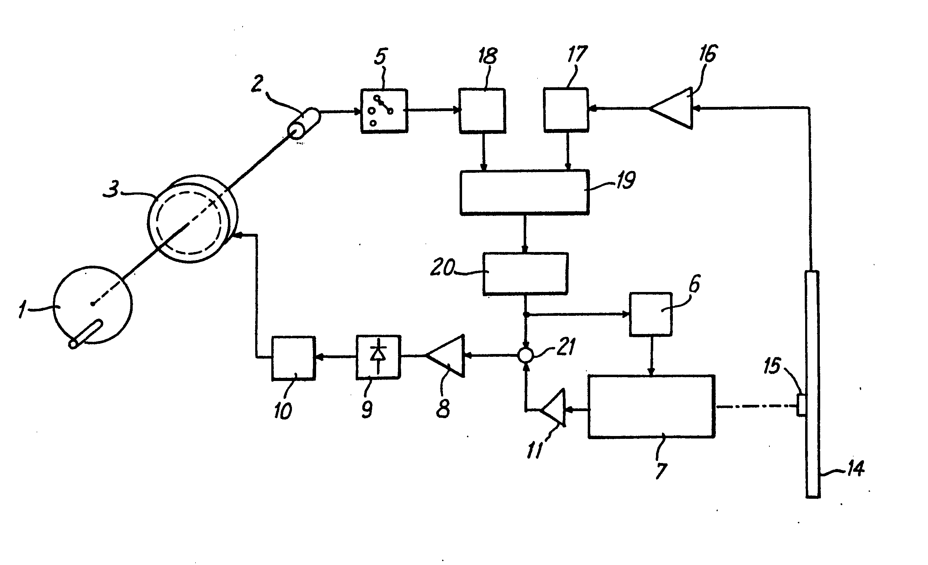

D'autres caractéristiques de l'invention ressortiront de la description qui suit faite avec référence au dessin annexé sur lequel on peut voir un schéma symbolique simplifié d'un dispositif de commande avec contrôle de position pour machine-outil, selon l'invention.

En se reportant au dessin, on peut voir que la manivelle 1 manœuvrable par l'utilisateur est reliée par l'intermédiaire d'un coupleur magnétique à poudre 3, à un organe tournant 2 constitué par exemple par un codeur rotatif émettant des signaux rectangulaires ou impulsionnels. Ces signaux sont appliqués à un circuit de calibration 5, susceptible d'effectuer une multiplication par 1, 10 ou 100 par exemple, du nombre d'impulsions émises par le codeur 2, en vue de fournir différentes vitesses d'avance à l'outil. Les impulsions sortant du circuit de calibration 5 sont appliquées à un premier compteur 18.

Le moteur 7 de la machine-outil entraîne un axe commandé symbolisé en 15. Un dispositif 14 de contrôle de la position de l'outil est prévu au voisinage immédiat de l'axe 15. Ce dispositif comporte une graduation micrométrique et délivre une impulsion sensiblement rectangulaire chaque fois qu'une graduation est franchie au cours du déplacement de l'outil. Ces impulsions sont adressées, par l'intermédiaire d'un amplificateur 16, à un deuxième compteur 17. Les deux compteurs 18 et 17 sont reliés à un comparateur 19 qui délivre un signal numérique égal à la différence des nombres d'impulsions accumulées par les deux compteurs 17 et 18.

Ce signal numérique est appliqué à un convertisseur 20 numérique-analogique, qui délivre un signal analogique de commande au variateur 6 du moteur 7. Ce signal analogique est également appliqué, par l'intermédiaire d'un sommateur 21, à l'amplificateur 8 relié à un redresseur 9 fournissant un signal redressé à l'alimentation 10 du coupleur magnétique à poudre 3, de façon à donner à l'opérateur la sensation tactile des efforts que! que soit le sens de rotation de la manivelle 1.

Par ailleurs, un signal image du courant dans l'induit du moteur 7 est prélevé et appliqué, par l'intermédiaire d'un amplificateur 11 et du sommateur 21, à l'amplificateur 8 et donc au coupleur magnétique à poudre 3. Le coupleur 3 agit en frein sur l'arbre de la manivelle 1, et il simule le couple de charge d'une manivelle mécanique en recevant d'une part un signal fonction du déplacement de l'outil par l'intermédiaire du convertisseur numérique-analogique 20, d'autre part un signal proportionnel à la charge du moteur 7, donc à la difficulté d'usinage, par l'intermédiaire de l'amplificateur 11.

L'utilisateur peut ainsi se rendre compte manuellement en manœuvrant la manivelle 1, de la difficulté d'usinage représentée par la difficulté de manœuvre due à la résistance du coupleur magnétique à poudre 3. En jouant sur le gain de l'amplificateur 11, on peut doser le couple de freinage du coupleur 3 en réponse au signal de charge du moteur.

Ainsi après chaque commande manuelle de la manivelle 1, le moteur 7 se trouve sollicité par l'intermédiaire de son variateur 6, et il entraîne un axe 15 dont le déplacement est contrôlé par le dispositif 14 avec une grande précision.

On peut équiper chaque axe de la machine-outil d'une manivelle 1 couplée à un codeur numérique 2 par l'intermédiaire d'un coupleur magnétique à poudre 3, le contrôle de la position de l'outil étant assuré par un dispositif de contrôle 14.

### Revendications

1. Dispositif de commande à contrôle de position pour machine-outil du type comprenant :
   une manivelle manœuvrable (1) par un utilisateur et reliée à un organe tournant (2) destiné à délivrer un signal de consigne numérique ;
   un dispositif (14) de contrôle de position de l'outil destiné à délivrer un signal numérique de contrôle de position de l'outil ;
   des moyens (17, 18, 19) pour comparer entre eux lesdits signaux numériques de consigne et de contrôle ;
   un convertisseur numérique-analogique (20) pour convertir en un signal analogique le résultat numérique de la comparaison et pour commander avec ledit signal analogique la vitesse d'un moteur (7) à travers un variateur (6) ;
   ledit dispositif étant caractérisé par le fait que afin de fournir audit utilisateur une sensation tactile des efforts s'exerçant entre la machine-outil et une pièce usinée par ladite machine, ladite manivelle (1) manœuvrable par ledit utilisateur est reliée audit organe tournant (2) par l'intermédiaire d'un coupleur magnétique à poudre (3) et que ledit coupleur magnétique (3) à poudre est alimenté par un signal électrique qui est une fonction représentative desdits efforts s'exerçant entre la machine-outil et ladite pièce usinée par ladite machine.

2. Dispositif selon la revendication 1, caractérisé en ce que le signal électrique d'alimentation dudit coupleur magnétique à poudre (3) est le signal délivré par ledit convertisseur numérique-analogique (20).

3. Dispositif selon la revendication 1, caractérisé en ce que le signal électrique d'alimentation dudit coupleur magnétique à poudre (3) est un signal image de l'intensité du courant dans l'induit dudit moteur (7).

4. Dispositif selon la revendication 1, caractérisé en ce que le signal électrique d'alimentation dudit coupleur magnétique à poudre (3) est la somme du signal délivré par ledit convertisseur-numérique analogique (20) et d'un signal image de l'intensité du courant dans l'induit dudit moteur (7).

### Claims

1. Control device with position monitoring for a machine tool, of the type comprising :
   a crank (1) operable by a user and connected to a rotary element (2) adapted to deliver a digital reference signal ;
   a tool position monitoring device (14) adapted to emit a digital tool position monitoring signal ;
   means (17, 18, 19) for comparing the said digital reference and monitoring signals with one another ;
   a digital-analog converter (20) for converting the digital result of the comparison into an analog signal, and for controlling the speed of a motor (7) through a change-speed gear (6) with the said analog signal ;
   the said device being characterised in that in order to provide the said user with a tactile sensation of the forces acting between the machine tool and a piece processed by the said machine, the said crank (1) operable by the said user is connected to the said rotary element (2) by means of a magnetic powder coupling (3), and that the said magnetic powder coupling (3) is supplied with an electrical signal which is a representative function of the said forces occuring between the machine tool and the said part being processed by the said machine.

2. Device according to claim 1, characterised in that the electrical signal supplying the said magnetic powder coupling (3) is the signal delivered by the said digital-analog converter (20).

3. Device according to claim 1, characterised in that the electrical supply signal of the said magnetic powder coupling (3) is an image signal of the current intensity in the armature of the said motor (7).

4. Device according to claim 1, characterised in that the electrical supply signal of the said magnetic powder coupling (3) is the sum of the signal delivered by the said digital-analog converter (20) and of an image signal of the intensity of the current in the armature of the said motor (7).

**Patentansprüche**

1. Steuergerät zum Positionssteuern einer Werkzeugmaschine, mit

einer von einem Benutzer zu betätigenden Kurbel (1), die mit einem Drehorgan (2) verbunden ist, das ein digitales Sollsignal zu liefern hat,

einer Positionskontrollvorrichtung (14) für das Werkzeug, zum Abgeben eines die Werkzeugposition kontrollierenden Digitalsignals,

einer Einrichtung (17, 18, 19) zum Vergleichen der Soll- und Kontrollsignale miteinander,

einem Digital-Analog-Umsetzer (20) zum Umsetzen des digitalen Ergebnisses des Vergleichs in ein Analogsignal und zum Steuern der Drehzahl eines Motors (7) mit diesem Analogsignal über ein Getriebe (6),

dadurch gekennzeichnet, daß die von dem Benutzer zu betätigende Kurbel (1), um dem Benutzer ein Tastempfinden für die Kräfte zu vermitteln, welche zwischen der Werkzeugmaschine und einem von der Maschine bearbeiteten Werkstück auftreten, mit dem Drehorgan (2) über eine Magnetpulverkupplung (3) verbunden ist, und daß der Magnetpulverkupplung (3) ein elektrisches Signal zugeführt wird, das eine charakteristische Funktion der Kräfte darstellt, die zwischen der Werkzeugmaschine und dem von der Maschine bearbeiteten Werkstück auftreten.

2. Gerät nach Anspruch 1, dadurch gekennzeichnet, daß das der Magnetpulverkupplung (3) zugeführte Signal das von dem Digital-Analog-Umsetzer (20) abgegebene Signal ist.

3. Gerät nach Anspruch 1, dadurch gekennzeichnet, daß das der Magnetpulverkupplung (3) zugeführte Signal ein die Stromstärke in dem Anker des Motors (7) darstellendes Signal ist.

4. Gerät nach Anspruch 1, dadurch gekennzeichnet, daß das der Magnetpulverkupplung (3) zugeführte Signal die Summe des von dem Digital-Analog-Umsetzer (20) abgegebenen Signals und eines die Stromstärke in dem Anker des Motors (7) darstellenden Signals ist.

0 065 918